# EUROPÄISCHE PATENTANMELDUNG

(11) **EP 4 376 239 A2**
(43) Veröffentlichungstag der Anmeldung: **29.05.2024**
(21) Anmeldenummer: 24170085.5
(22) Anmeldetag: 02.09.2020
(51) Int. Cl.: H02G 3/12

(54) **INSTALLATIONSDOSE**

(30) Priorität: 06.09.2019 CH 11282019
(62) Teilanmeldung aus: 20194152.3
(71) Anmelder: Kaiser GmbH & Co. KG, 58579 Schalksmühle (DE)
(72) Erfinder: Viola, Marc, 58339 Breckerfeld (DE); Reich, Sebastian, 58507 Lüdenscheid (DE); Kassühlke, Rüdiger, 57482 Wenden (DE)
(74) Vertreter: Rentsch Partner AG

(57) **Zusammenfassung**

Die Erfindung betrifft eine Installationsdose (1) fürelektrotechnische Zwecke umfassend einen Dosenboden (2) und eine sich in eine axiale Richtung (z) erstreckende röhrenförmige Seitenwand (3). Zwei deformierbare Membranen (12) erstrecken sich je zumindest bereichsweise über den Dosenboden (2) und die röhrenförmige Seitenwand (3) und sind in Bezug auf eine sich in die axiale Richtung erstreckende und in Bezug auf die Seitenwand mittig in der Installationsdose (1) angeordneten Längsachse innerhalb von 180°, insbesondere innerhalb 160° des Dosenumfangs angeordnet. In der Seitenwand (3) in der jeweiligen Membran (12) ist mindestens eine erste Einführöffnung (7) für ein in die Installationsdose (1) einzuführendes Kabel angeordnet. In dem eingeführten Zustand des Kabels durch die erste Einführöffnung (7) ist die erste Einführöffnung (7) winkelig zur axialen Richtung angeordnet und in der Seitenwand ist ein Einführkanal (6) für das eingeführte Kabel ausgebildet, welcher sich entlang einer Aussenseite (10) der Seitenwand (3) erstreckt.

## Beschreibung

Die vorliegende Erfindung bezieht sich auf eine Installationsdose für elektronische Zwecke, insbesondere auf eine Installationsdose für den Anschluss von Netzwerckabeln und -steckern.

Aus dem Stand der Technik sind Installationsdosen bekannt, welche für den Anschluss von herkömmlichen Stromsteckern, Leuchten, Verteiler oder dergleichen, in einer Wand gedacht sind. Diese Installationsdosen weisen in der Regel Einführöffnungen für vereinzelte Kabel und/oder Rohre auf, welche in der Seitenwand und/oder dem Dosenboden der Installationsdose angebracht sind. Diese bekannten Installationsdosen lassen sich einfach, schnell und ohne hohen Kostenaufwand montieren, da der maximale Aussendurchmesser der Installationsdose, bzw. einer röhrenförmigen Seitenwand durch nach DIN-Normen genau bestimmte Innendurchmesser der jeweiligen Bohrung bzw. eines Wanddurchbruchs vorgegeben sind.

Weiterhin sind Installationsdosen bekannt, die zur Aufnahme eines oder mehrerer, beispielsweise zweier Netzwerkanschlüsse und/oder damit jeweils verbundenen elektronischen Schaltungen dienen. Für den Einbau eines Netzwerksteckers sind jedoch die Anforderungen bezüglich des Installationsraumes anders: Der standardisierte Anschluss für Netzwerkstecker ist in der Regel in seiner Form geneigt und weist einen flacheren Aufbau als der Anschluss einer herkömmlichen Steckdose auf. Die Datenkabel sind zudem in der Regel winkelig an dem Netzwerkstecker angeschlossenen.

Die Einführung dieser winkelig abstehenden Kabel nahe der Installationsöffnung der Installationsdose ist schwer zu realisieren, da die Netzwerk- und Datenkabel aufgrund ihres strukturellen Aufbaus deutlich grössere Biegeradien als beispielsweise herkömmliche, einfach biegbare Kupfer-Stromkabel aufweisen. Dies erschwert weiter die Montage der Kabel an und innerhalb der Installationsdose.

Bekannten Installationsdosen für Netzwerkanschlüsse sind daher oftmals rechteckig ausgeformt und können lediglich in besonders ausgebildeten bzw. gefertigten Durchbrüchen einer Wand eingesetzt und montiert werden. Die Montage solcher Dosen in einer Wand ist insofern sehr aufwendig und mit hohen Kosten verbunden.

Aus dem Stand der Technik ist die Verwendung von Doppeldosen bekannt, welche jedoch ein verhältnismässig grosses Loch in der Wand für dessen Einbau erfordern, oder die Verwendung von abgewinkelten Dosen mit einem von einem Hauptinstallationsraum seitlich abragenden Nebeninstallationsraum. Diese Dosen können bereichsweise flexibel ausgestaltet sein, so dass diese durch eine kleinere Öffnung in der Wand verbaut werden können. Ein Beispiel für eine solche Dose ist in der EP3091624B1 von der gleichen Anmelderin offenbart oder in der EP2824784**,** veröffentlicht im Namen von F-TronikWinfried Fohs.

Eine Aufgabe der Erfindung besteht darin eine Installationsdose bereitzustellen, welche das Einführen von Kabeln vereinfacht. Eine weitere Aufgabe der Erfindung besteht darin eine einfach einzubauende Installationsdose, insbesondere für Netzwerkstecker, bereitzustellen.

Die Erfindung betrifft eine Installationsdose für elektronische Zwecke umfassend einen Dosenboden und eine daran anschliessende, in eine axiale Richtung erstreckende röhrenförmige Seitenwand. Zwischen der röhrenförmigen Seitenwand und dem Dosenboden kann ein Übergangsbereich, z.B. in Form einer Abschrägung, vorhanden sein. Weiterhin kann die röhrenförmige Seitenwand in die axiale Richtung Stufen, bzw. umlaufende Absätze aufweisen. Mit Vorteil ist die röhrenförmige Seitenwand zumindest abschnittsweise zylinderförmig. Jedoch sind aus mehreckige Ausgestaltungen möglich. Die Seitenwand und der Dosenboden bilden einen Installationsraum zur Aufnahme von Bauteilen, insbesondere elektronischen Bauteilen, aus. Zur Installation dieser Bauteile weist die Installationsdose eine dem Dosenboden gegenüberliegende und von der Seitenwand umgebende Installationsöffnung auf. In einem verbauten Zustand der Installationsdose in einer Wand liegt die Installationsöffnung mit Vorteil an der Wandoberfläche an. Für eine einfache Montage der Installationsdose in einem runden und normierten Wandausbruch ist es vorteilhaft, wenn die Installationsdose in der axialen Richtung innerhalb einer Kontur eines Randes der Installationsöffnung angeordnet ist, sodass die Installationsdose einfach in diese eingesetzt werden kann. Die Installationsdose kann mit dem Rand der Installationsöffnung auf der Wand aufliegen.

In der Seitenwand der Installationsdose kann mindestens eine Einführöffnung für ein in die Installationsdose und in den Installationsraum einzuführendes Kabel, insbesondere Daten- und Netzwerkkabel, angeordnet sein. Je nach Anwendung kann die mindestens eine Einführöffnung ebenfalls für ein in die Installationsdose und in den Installationsraum, insbesondere durch die Seitenwand, einzuführendes Rohr verwendet werden. Das Rohr kann dazu dienen Kabel in die Installationsdose einzuführen. Die Einführöffnung ist mit Vorteil initial, d.h. vor dem Einführen eines Kabels durch die Einführöffnung und vor einem initialen Öffnen der Einführöffnung, von einem heraustrennbaren Wandbereich verschlossen. Der heraustrennbare Wandbereich kann beispielsweise über mindestens eine Dünnstelle mit der Seitenwand verbunden und entlang dieser heraustrennbar sein und/oder als Membran ausgebildet sein, wie nachfolgend näher beschrieben.

In einem eingeführten Zustand des Kabels durch die Einführöffnung ist die Einführöffnung mit Vorzug winkelig zur axialen Richtung angeordnet, so dass eine von der Einführöffnung aufgespannte Ebene winkelig zur axialen Richtung angeordnet ist. Auf diese Weise wird eine nach Möglichkeit knickfreie und platzsparende Einführung des Kabels durch die Seitenwand ermöglicht, ohne dass das Kabel senkrecht zur Seitenwand eingeführt werden muss. Beispielsweise kann (in dem eingeführten Zustand des Kabels) die Einführöffnung, respektive die von der Einführöffnung aufgespannte Ebene, zwischen 10° bis 90° (grad), insbesondere zwischen 35° - 60 °, geneigt zur axialen Richtung angeordnet sein. Im Fall, dass die Einführöffnung 90° zur axialen Richtung geneigt angeordnet ist, ist die Flächennormale der von der Einführöffnung aufgespannten Ebene parallel zuraxialen Richtung ausgerichtet. Im Fall, dass die Einführöffnung nicht winkelig, also 0° zur axialen Richtung geneigt angeordnet ist, ist die Einführöffnung in der Seitenwand derart angeordnet, dass ein Kabel senkrecht zu dieser eingeführt werden muss.

Um ein möglichst knickfreies Einführen eines Kabels weiter zu unterstützen kann es vorteilhaft sein, wenn in dem eingeführten Zustand des Kabels durch die Einführöffnung in der Seitenwand ein Einführkanal für das eingeführte Kabel ausgebildet ist. Der Einführkanal kann dazu dienen mindestens ein Kabel aufzunehmen und entlang der Seitenwand zu führen. Mit Vorteil erstreckt sich der Einführkanal von der Einführöffnung aus und von der Installationsöffnung weglaufend entlang der Seitenwand. Der Einführkanal kann sich bis zum Übergangsbereich (wenn vorhanden) oder bis zum Dosenboden der Installationsdose erstrecken. Der Einführkanal ist mit Vorteil innerhalb einer Kontur der Seitenwand ausgebildet. Der Querschnitt des Einführkanals in der axialen Richtung kann als eine Vertiefung in der Seitenwand ausgebildet sein, beispielsweise in der Form eines Kreisabschnitts zur zumindest bereichsweisen Aufnahme des eingeführten Kabels. Der Einführkanal kann sich in axialer Richtung entlang einer Aussenseite der Seitenwand erstrecken oder zu dieser winkelig angeordnet sein. Der Querschnitt des Einführkanals kann sich entlang des Einführkanals verändern. Beispielsweise kann der Einführkanal mit zunehmender Entfernung von der Einführöffnung weniger tief in eine radiale Richtung der Installationsdose ausgestaltet sein. Alternativ oder ergänzend kann der Radius eines Kreisabschnitts des Querschnitts des Einführkanals mit zunehmender Entfernung von der Einführöffnung grösser werden oder andersartig verändern. In einer Variante der Erfindung weist die Installationsdose zumindest eine deformierbare Membran auf, welche zumindest bereichsweise über den Dosenboden und/oder die Seitenwand, insbesondere bereichsweise über den Dosenboden und die Seitenwand, erstreckt. Wenn ein Übergangsbereich zwischen dem Dosenboden und der Seitenwand vorhanden ist, kann sich die Membran ebenfalls über diesen erstrecken. Die deformierbare Membran ist mit Vorteil aus einem weichelastischen Material, vorzugsweise einem Kunststoff, ausgestaltet. Mit Vorzug erstreckt sich die Membran in axialer Richtung über 60%, insbesondere über 75%, der Installationsdose. Je nach Ausgestaltung der Installationsdose können auch zwei deformierbare Membrane vorhanden sein. Die zwischen den beiden Membranen liegende Bereiche der Seitenwand und/oder des Dosenbodens können zumindest teilweise aus dem gleichen Material wie die Membran bestehen. Für eine dennoch ausreichende Stabilität der Installationsdose, können dieser Bereiche der Seitenwand aus weichelastischem Kunststoff eine grössere Wanddicke als die deformierbaren Membrane aufweisen. Alternativ oder ergänzend kann der zwischen den beiden Membranen liegende Bereich der Seitenwand und/oder des Dosenbodens und/oder des Übergangsbereichs zumindest teilweise aus einem anderen Material wie die Membran bestehen, wie z.B. aus einer harten Kunststoffkomponente. Mit Vorteil sind die zwei deformierbaren Membrane in Bezug auf eine sich in die axiale Richtung erstreckende und in Bezug auf die Seitenwand mittig in der Dose angeordneten Längsachse, innerhalb von 180°, insbesondere innerhalb von 160°, des Dosenumfangs angeordnet. Eine solche Anordnung hat den Vorteil, dass die weniger biegsamen Daten und/oder Netzwerkkabel, welche in der Regel richtungsabhängig an einem Schaltgerät angeschlossen werden, in der Installationsdose weniger geknickt werden müssen und der Anschluss der Kabel einfacher durchgeführt werden kann.

In einer Variante der Erfindung kann die zumindest eine Einführöffnung als eine in der Membran angeordnete erste Einführöffnung ausgestaltet sein. Das eingeführte Kabel deformiert hierbei die um die erste Einführöffnung herumliegende Membran derart, dass die erste Einführöffnung im eingeführten Zustand des Kabels sich winkelig zur axialen Richtung ausrichtet und von der Einführöffnung wegweisend durch die Deformation in der Aussenseite der Membran ein Einführkanal gebildet wird. In einem nicht eingeführten Zustand des Kabels kann die Membran jedoch undeformiert sein und die Einführöffnung nicht winkelig zur axialen Richtung ausgerichtet sein. Durch das Heraustrennen des Wandbereiches entsteht durch die die erste Einführöffnung umgebene Membran eine flexible, dehnbare (erste) Einführungsöffnung zum Einführung von Kabeln in die Installationsdose. Die erste Einführungsöffnung kann sich flexibel dem Kabel anpassen. Sie ist infolge der sie umgebenden äusseren Membran bei Bedarf richtungsflexibel, d.h. es können einfach Kabel, die aus unterschiedlichen Richtung eintreffen, eingeführt werden. Weiterhin kann sie bei Bedarf auch einen seitlichen Versatz kompensieren. Mit Vorteil ist die erste Einführöffnung in die axiale Richtung bei einem Abstand von 25% bis 40% der Gesamtlänge der Installationsdose von einem Rand der Installationsöffnung positioniert. Beispielsweise kann der Abstand zwischen 20 - 30 mm, insbesondere zwischen 24 - 28 mm sein. Eine solche Positionierung der ersten Einführöffnung hat den Vorteil, dass in die axiale Richtung, hinter der ersten Einführöffnung und von der Installationsöffnung wegweisend, genügend Platz auf der Membran verbleibt, dass ein ausreichend langer Einführkanal ausgebildet werden kann, welcher ein kickfreies Einführen eines Kabels in die erste Einführöffnung ermöglicht. Mit Vorteil ist der Einführkanal in die axiale Richtung zwischen 10 - 40 mm, insbesondere 30 - 35 mm, lang.

Alternativ oder ergänzend kann die Membran derart ausgestaltet sein, dass das winkelige Einführen eines Kabels in die erste Einführöffnung ein Umschnappen oder eine lokale Deformation eines designierten Bereiches der Membran bewirkt, sodass der Einführkanal ausgebildet wird. Die Membran kann hierfür entlang des designierten Bereiches Verformungsbereiche und/oder Versteifungsbereiche aufweisen. Die Verformungsbereiche und/oder Versteifungsbereiche können speziell ausgestaltete Dünnstellen oder Verdickungen ausweisen und/oder bereichsweise aus einer zweiten Materialkomponente bestehen. Beispielsweise kann der designierte Bereich in einem ersten Zustand aus der Seitenwand herausgestellt sein und erst nach dem Einführen des Kabels (in einem zweiten Zustand) derart umgestülpt werden, dass ein Einführkanal innerhalb der Kontur der Seitenwand ausgebildet wird.

Alternativ oder ergänzend kann die zumindest eine Einführöffnung als eine in der Seitenwand angeordnete zweite Einführöffnung ausgestaltet sein. Die zumindest eine zweite Einführöffnung kann auch in einem mit dem heraustrennbaren Wandbereich verschlossenen Zustand (sowie in dem eingeführten Zustand des Kabels) winkelig zur axialen Richtung angeordnet ist. In diesem Fall weist die Aussenseite der Seitenwand einen vorzugsweise nicht deformierbaren Einführkanal auf. Die zweite Einführöffnung ist mit Vorzug in Bezug auf den Umfang der Installationsdose zu der ersten Einführöffnung versetzt angeordnet. Vorteilhafterweise weist die zweite Einführöffnung in der axialen Richtung von einem Rand der Installationsöffnung einen Abstand zwischen 45% - 75% der Gesamtlänge der Installationsdose auf. Mit Vorzug weist die zweite Einführöffnung in der axialen Richtung von einem Rand der Installationsöffnung einen Abstand von 35 - 55 mm, insbesondere zwischen 42 - 47 mm auf. Je nach Ausgestaltung und Anwendung der Installationsdose kann sich die Membran, wenn vorhanden, in axialer Richtung über die Position der zweiten Einführöffnung erstrecken.

Je nach Ausgestaltung der Installationsdose kann der Einführkanal von einem Absatz ausgehen, welcher winkelig von der Seitenwand radial nach innen absteht. In dem Absatz kann die zweite Einführöffnung angeordnet sein. Beispielsweise kann der Absatz zwischen 10 bis 90° (grad), insbesondere zwischen 35 - 60 °, geneigt zur axialen Richtung angeordnet sein. Die zweite Einführöffnung kann sich über den gesamten Absatz erstrecken oder nur einen Bereich davon ausmachen. Ebenfalls können multiple (zweite) Einführöffnungen auf dem Absatz angeordnet sein. In dem eingeführten Zustand des Kabels durch die zweite Einführöffnung, kann die von der Einführöffnung aufgespannte Ebene weiterhin einen von dem Winkel des Absatzes abweichenden Winkel zur Seitenwand aufweisen. Dies ist z.B. durch die Verformung / Deformation einer über die Einführöffnung spannenden Membran möglich, wie oben beschrieben. Z.B. kann der Absatz teilweise aus einem weichelastischen Material und/oder Membran bestehen, und die zweite Einführöffnung kann in dieser angeordnet, respektive von dieser umgeben sein. Mit Vorteil weist der Absatz in die axiale Richtung den gleichen Querschnitt auf, wie der sich von dem Absatz erstreckende Einführkanal. In einer möglichen Ausführungsform weist die Seitenwand einen umlaufenden Absatz mit mehreren Einführöffnungen auf. Die multiplen Einführöffnungen können sich einen gemeinsamen Einführkanal teilen. Beispielsweise kann der Einführkanal hinter dem umlaufenden Absatz um die Seitenwand umlaufend bis zum Übergangsbereich und/oder Dosenboden ausgebildet sein. Der mindestens eine Einführkanal kann ebenfalls Haltemittel für ein eingeführtes Kabel, beispielsweise in der Form von Kabel-Clips oder ähnliches, aufweisen.

Je nach Ausgestaltung kann die Installationsdose in der deformierbaren Membran weiterhin eine dritte Einführöffnung zum Durchführen eines Rohres in den Installationsraum aufweisen. Die dritte Einführöffnung kann ebenfalls von einem heraustrennbaren Wandbereich verschlossen sein. Mit Vorteil ist der heraustrennbare Wandbereich in diesem Fall ein Teil der deformierbaren Membran. Die dritte Einführöffnung zum Durchführen des Rohres in vorzugsweise zumindest teilweise in dem Übergangsbereich und/oder dem Dosenboden angeordnet. Durch das Heraustrennen des heraustrennbaren Bereiches aus der Membran entsteht eine flexible, dehnbare dritte Einführöffnung zum Einführung von Elektrorohren mit unterschiedlichen Durchmessern in die Installationsdose. Die dritte Einführöffnung kann sich somit flexibel an unterschiedliche Rohrdurchmesser anpassen und erlaubt eine gewisse Richtungsflexibilität, d.h. es können Rohre, welche aus unterschiedlichen Richtung eintreffen, eingeführt werden. Die dritte Einführöffnung weist mit Vorteil einen grösseren Durchmesser auf als die erste Einführöffnung um ein Rohr aufzunehmen.

Für das einfache Heraustrennen eines heraustrennbaren Bereiches der ersten Einführöffnung und/oder der zweiten Einführöffnung und/oder der dritten Einführöffnung kann der heraustrennbare Wandbereich als Membran ausgestaltet sein, welche beispielsweise herausgetrennt oder durchstochen werden kann.

Alternativ oder ergänzend kann zumindest bereichsweise entlang eines Randes des heraustrennbaren Bereiches eine umlaufende Dünnstelle vorgesehen. Die umlaufende Dünnstelle kann beispielsweise als eine Kerbe, bzw. Vertiefung mit einer V- oder U-Form, bzw. als eine materialtechnische Schwächung, welche z.B. durch Parameter des Herstellungsprozesses beeinflusst wird, ausgestaltet sein. Die Dünnstelle kann eine konstante und/oder eine variable Dicke in Umfangsrichtung aufweisen. Weiterhin kann die Dünnstelle und/oder ein an sie angrenzender Bereich so ausgestaltet sein, dass beim Heraustrennen an einer oder mehreren Stellen eine Konzentration der anliegenden Kräfte auftritt, welche das Anreisen / Heraustrennen unterstützen. Dies kann z.B. durch eine oder mehrere zusätzliche Kerben, oder andere Elemente, welche zur Stresskonzentration dienen, erreicht werden. Alternativ oder ergänzend kann um die jeweilige Einführöffnung eine umlaufende Wulst, respektive eine lokale Verdickung, angeordnet sein. Im Fall, dass die Einführöffnung von einer Membran umgeben ist, bzw. in dieser angeordnet ist, wird so nach dem Öffnen ein ungewolltes Einreissen der äusseren Membran vermieden. Diese Wulst kann direkt entlang der Dünnstelle oder in einem gewissen Abstand dazu angeordnet sein. Mit Vorteil bildet die Wulst eine Dichtlippe aus, welche die Installationsdose gegenüber dem eingeführten Rohr oder Kabel abdichtet. Die umlaufende Wulst kann auf der Dosenaussenseite und/oder auf der Doseninnenseite angeordnet sein.

Je nach Ausgestaltung kann der heraustrennbare Bereich auf der Aussenseite oder der Innenseite eine angeformte, nach aussen vorstehende Abreisslasche aufweisen, welche zum Heraustrennen dient. Weiterhin kann der heraustrennbare Bereich der Membran innen und/oder aussen angeordnete Versteifungsrippen aufweisen, welche bei Bedarf mit der Abreisslasche gekoppelt sind und die zum Heraustrennen über die Abreisslasche eingeleiteten Kräfte so verteilen, dass der heraustrennbare Bereich wie vorgesehen herausgetrennt werden kann. Die Abreisslasche ist vorteilhafterweise auf der Aussenseite der Installationsdose angebracht. Ist zudem die oben beschriebene Dünnstelle vorhanden, ist diese bevorzugterweise auf der Innenseite angeordnet. Eine Kombination dieser Merkmale (aussenliegende Abreisslasche und innenliegende Dünnstelle) hat den Vorteil, dass die Dimensionierung der Dünnstelle losgelöst von der auf der Aussenseite angeformten Abreisslasche vorgenommen werden kann und damit deutlich einfacher einstellbar ist.

Für eine effiziente und kostengünstige Herstellung kann die Installationsdose mittels Spritzguss hergestellt werden. In diesem Fall kann die Seitenwand und der Dosenboden zumindest bereichsweise aus einem ersten Spritzgussmaterial, insbesondere einem (harten) Kunststoff, bestehen. Weiterhin kann die Membran und/oder die heraustrennbaren Wandbereiche zumindest bereichsweise aus einem zweiten Spritzgussmaterial, insbesondere einem weich-elastischem Kunststoff, bestehen.

Für die Verbindung zweier benachbarter Installationsdosen, kann die Installationsdose mindestens eine Verbindungsöffnung in der Seitenwand aufweisen. Die Verbindungsöffnung dient zur Aufnahme eines Adapters zum Wirkverbinden der Installationsdose mit einer weiteren Installationsdose. Die weitere Installationsdose kann eine Installationsdose gleicher oder unterschiedlicher Bauart sein. Mit Vorteil ist die Verbindungsöffnung in einem nicht (mit einer weiteren Installationsdose) wirkverbundenen Zustand durch einen heraustrennbaren Wandbereich verschlossen. Dieser kann zum erleichterten Heraustrennen des Wandbereichs eine Lasche aufweisen. Für eine einfache Verbindung der Installationsdosen ist die (Ebene der) Verbindungsöffnung mit Vorteil nicht winkelig zur axialen Richtung angeordnet, sodass die Verbindungsöffnung im Wesentlichen 0° zur axialen Richtung geneigt angeordnet ist und der Adapter senkrecht zur Seitenwand einführbar ist.

Falls die Installationsdose, wie oben beschrieben zwei deformierbare Membrane aufweist, ist die Verbindungsöffnung mit Vorteil in Bezug auf den Umfang der Installationsdose je links und rechts neben den Membranen angeordnet. Beispielsweise kann eine Installationsdose zwei Verbindungsöffnungen aufweisen, welche in Bezug auf die Längsachse der Installationsdose gegenüber voneinander angeordnet sind. Die beiden Verbindungsöffnungen sind mit Vorteil koaxial zueinander ausgerichtet.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Variante einer erfindungsgemässen Installationsdose in einer perspektivischen Ansicht;
- Fig. 2: die Variante der Installationsdose gemäss Figur 1 in einer weiteren perspektivischen, teilweise geschnittenen Ansicht;
- Fig. 3: die Variante der Installationsdose gemäss Figur 1 in einer Ansicht von der Seite;
- Fig. 4: ein Detail der Figur 3;
- Fig. 5: das Detail gemäss Figur 4 in einem eingeführten Zustand des Kabels;
- Fig. 6: zwei miteinander verbundene Installationsdosen einer zweiten erfindungsgemässen Variante.

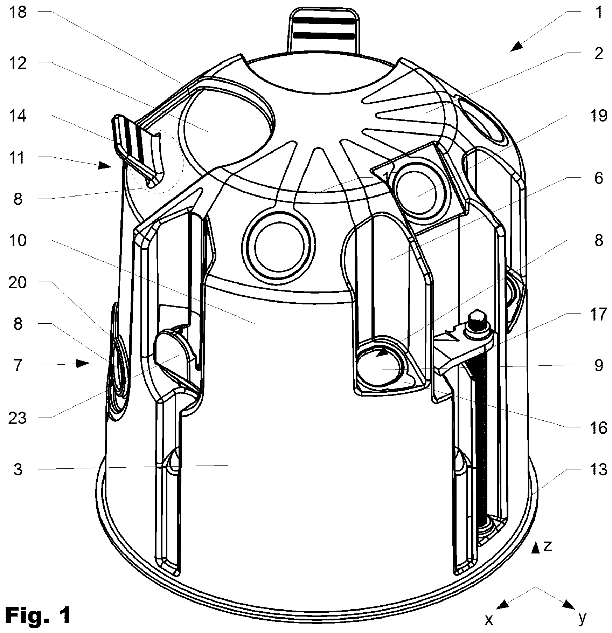

**Figur 1** bis **Figur 3** zeigen eine mögliche Variante der Installationsdose 1 gemäss der Erfindung für elektronische Zwecke. Die gezeigte Installationsdose 1 umfasst einen Dosenboden 2 und eine daran anschliessende, in eine axiale Richtung (z-Richtung) erstreckende röhrenförmige Seitenwand 3, welche gemeinsam einen Installationsraum 5 bilden. Zwischen dem Dosenboden 2 und der Seitenwand 3 kann, wie gezeigt, ein Übergangsbereich 18 angeordnet sein. Gegenüberliegend von dem Dosenboden 2 und von der Seitenwand 3 umgeben ist eine Installationsöffnung 4 vorhanden. In der Seitenwand 3 ist mindestens eine Einführöffnung 7, 8 für ein in die Installationsdose 1 einzuführendes Kabel angeordnet. In einem initialen Zustand, d.h. vor dem Einführen des Kabels in die Einführöffnung, ist diese durch einen heraustrennbaren Wandbereich 9 verschlossen. Die Installationsdose 1 kann in der axialen Richtung innerhalb einer Kontur eines Randes 13 der Installationsöffnung 4 angeordnet sein. Für die Montage in einer Wandöffnung (nicht gezeigt) weist die Installationsdose 1 zudem Montagemittel 17 auf.

Zumindest bereichsweise über den Dosenboden 2, den Übergangsbereich 18 und die Seitenwand 3 erstrecken sich in der gezeigten Ausführungsform zwei deformierbare Membrane. Die Membrane 12 erstrecken sich in axialer Richtung über 60% insbesondere über 75% der Installationsdose 1. In jeder Membran 12 sind an einem der Installationsöffnung 4 zugewandten Ende zwei erste Einführöffnungen 7 für je ein Kabel angeordnet. An dem Dosenboden 2 hingewandten Ende der Membrane 12 ist zudem je eine dritte Einführöffnung 11 für ein Rohr angeordnet. Neben der Membran 12 sind weiterhin zwei zweite Einführöffnungen 8 für ein Kabei angeordnet. Vierte Einführöffnungen 19 im Dosenboden 2 und/oder im Übergangsbereich 18 können vorhanden sein. Jedoch ist auch eine andere Anzahl, Position und Ausgestaltung der Einführöffnungen 7, 8, 11, 19 und der Membran 12 denkbar.

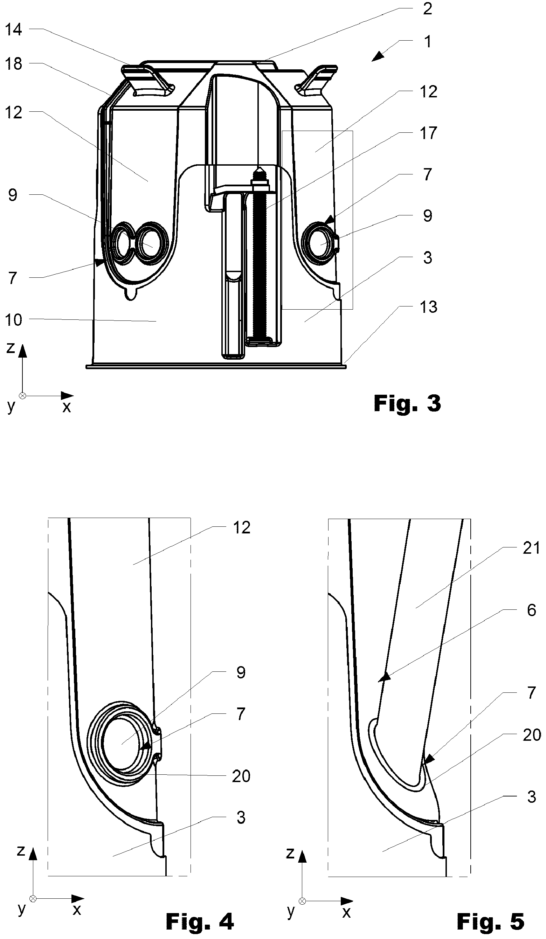

In einem eingeführten Zustand des Kabels 21 durch die erste Einführöffnung 7 ist die erste Einführöffnung 7 durch Deformation der Membran 12 winkelig zur axialen Richtung (z-Richtung) angeordnet. In der Seitenwand wird zudem ein Einführkanal 6 für das eingeführte Kabel ausgebildet, welcher sich entlang einer Aussenseite 10 der Seitenwand 3 und in der Membran 12 erstreckt. Dies ist in **Figur 4** (keine Deformation) und **Figur 5** (eingeführter Zustand des Kabels 21 mit Deformation der Membran 12) schematisch dargestellt. In diesem Fall wird der Einführkanal 6 der ersten Einführöffnung 7 durch Deformation der Membran 12 ausgebildet. Um die erste Einführöffnung herum kann eine Dünnstelle 15 und/oder eine Verdickung 20 angeordnet sein, wie weiter unten beschrieben. Die ersten Einführöffnungen 7 können in der axialen Richtung von einem Rand 13 der Installationsöffnung 4 einen Abstand zwischen 25% bis 40 % der Gesamtlänge der Installationsdose 1 aufweisen.

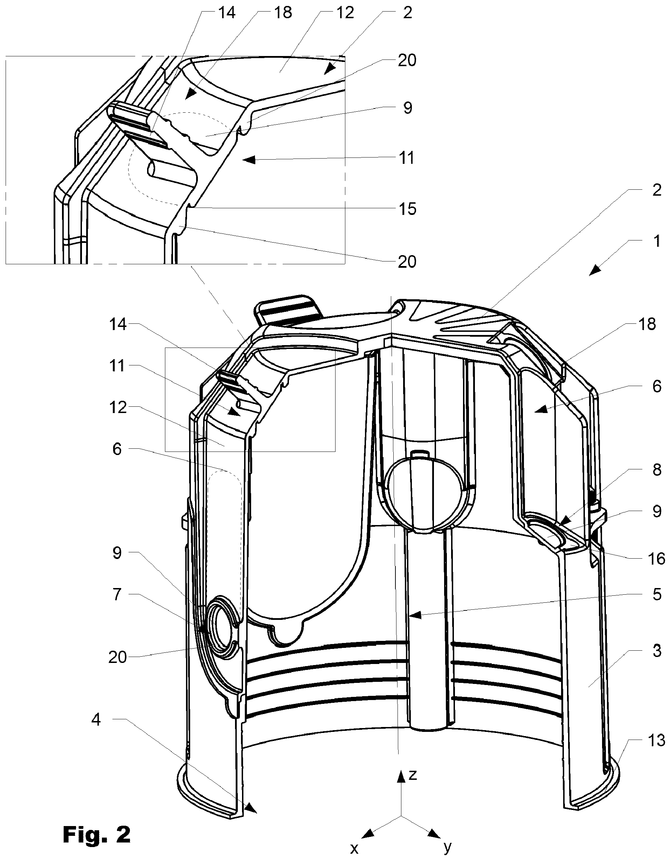

Die dritte Einführöffnung 11 in der Membran 12 ist ebenfalls von einem heraustrennbaren Wandbereich 9 verschlossen, wie in der Detailansicht von **Figur 2** ersichtlich. Die dritte Einführöffnung 11 ist im gezeigten Fall im Bereich des Übergangsbereiches 18 angeordnet und hat einen grösseren Durchmesser als die erste bzw. die zweite Einführöffnung 7, 8, welche für ein Kabel, insbesondere ein Datenkabel, gedacht sind. Der heraustrennbare Bereich ist ebenfalls aus dem weichelastischen Material der Membran 12 geformt und kann entlang von einer umlaufenden Dünnstelle 15 herausgetrennt werden. Die Heraustrennung wird durch eine Lasche 14 erleichtert. Um die Dünnstelle15 herum ist eine Verdickung 20 der Membran 12 angeordnet, welche ein Einreissen der Membran verhindert und eine Dichtlippe für das einzuführende Rohr bildet. Eine ähnliche Ausgestaltung ist ebenfalls für die ersten Einführöffnungen 7 denkbar.

Die zweite Einführöffnung 8 ist in der Seitenwand 3, insbesondere neben der Membran 12, angeordnet (siehe **Figur 1****).** In der Seitenwand 3 ist hierbei ein Absatz 16 vorgesehen, im welchen die zweite Einführöffnung 8 angeordnet ist. Die zweite Einführöffnung 8 ist ebenfalls von einem heraustrennbaren Wandbereich 9 in Form einer Membran verschlossen. Von der zweiten Einführöffnung 8 aus erstreckt sich in die axiale Richtung (z-Richtung) von der Installationsöffnung 4 weg ein Einführkanal entlang der Aussenseite 10 der Seitenwand 3. Der Einführkanal 6 ist sowohl in einem eingeführten Zustand als auch in einem nicht eingeführten Zustand des Kabels ausgebildet. Der Absatz 16 und respektive die zweite Einführöffnung 8 sind somit (in beiden Zuständen) winkelig zu der axialen Richtung ausgerichtet. Der Winkel des Absatzes 16 und der Winkel der zweiten Einführöffnung 8 können voneinander unterschiedlich sein.

Die zweite Einführöffnung 8 kann beispielsweise in der axialen Richtung von einem Rand 13 der Installationsöffnung 4 einen Abstand zwischen 45% - 75% der Gesamtlänge der Installationsdose 1 aufweisen. Mit Vorteil erstreckt sich die Membran 12 in axialer Richtung über die Position der zweiten Einführöffnung 8. Weiterhin ist die dritte Einführöffnung 11 in der axialen Richtung weiter von der Installationsöffnung 4 entfernt, als die erste Einführöffnung 7. In der axialen Richtung ist die zweite Einführöffnung vorteilhafterweise zwischen der dritten Einführöffnung und der ersten Einführöffnung angeordnet.

Die zwei deformierbaren Membrane 12 bestehen mit Vorteil zumindest bereichsweise aus einem weichelastischen Material. Die zwischen den beiden Membranen 12 liegende Bereiche der Seitenwand 3 und/oder des Dosenbodens 2 können zumindest teilweise aus dem gleichen weichelastischen Material bestehen. Vorteilhafterweise bestehen die Seitenwand 3 und der Dosenboden 2 zumindest bereichsweise aus einem ersten Spritzgussmaterial, insbesondere aus einem harten Kunststoff. Die Membran 12 und/oder die heraustrennbaren Wandbereiche 9 können hingegen aus einem zweiten Spritzgussmaterial bestehen. Dieses ist mit Vorzug weichelastischer, bzw. deformierbarer als das erste Spritzgussmaterial.

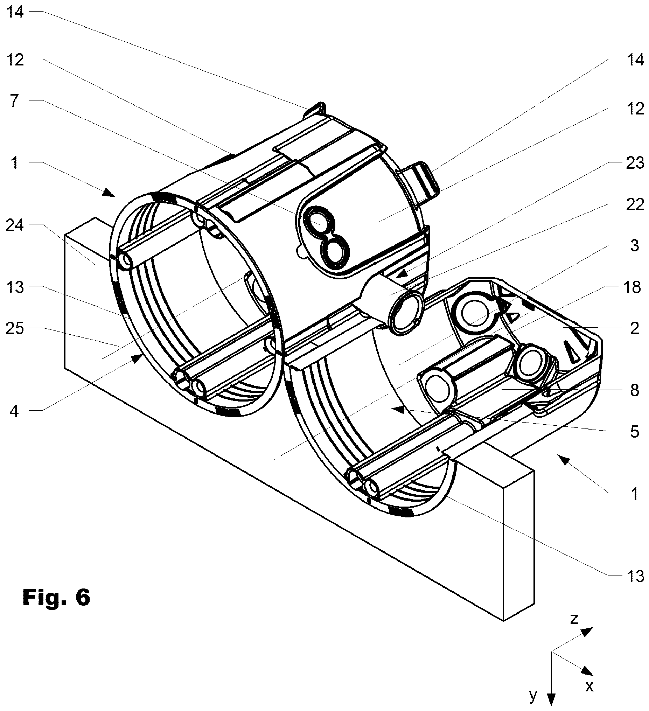

**Figur 6** zeigt zwei miteinander verbundene erfindungsgemässe Installationsdosen 1, welche in einer Hohlwand 24 eingebaut sind. Um die beiden Installationsräume miteinander zu verbinden befindet sich zwischen den Dosen ein Adapter 22. Dieser ist in die axiale Richtung von einem Rand 13 der jeweiligen Installationsdose 1 nach hinten versetzt. Die Längsachse des Adapters verläuft mit Vorteil im Wesentlichen parallel zur Wandoberfläche, bzw. zur Ebene der Installationsöffnung. In einem montierten Zustand erstreckt sich der Adapter durch je eine Verbindungsöffnung 23 der jeweiligen Installationsdose 1 in der Seitenwand 3. Mit Vorteil ist die Verbindungsöffnung 23 jedoch in einem nicht-wirkverbundenen Zustand der Installationsdose 1 durch einen heraustrennbaren Wandbereich verschlossen (vergleiche nicht wirkverbunden Zustand in **Figur 1****).** Dieser kann mit Hilfe einer Lasche herausgetrennt werden. Für eine einfache Verbindung der Installationsdosen 1 ist die Verbindungsöffnung 23 daher mit Vorteil nicht winkelig zur axialen Richtung angeordnet.

In dem gezeigten verbundenen Zustand der Installationsdosen 1 in **Figur 6** ist ersichtlich, dass die beiden Membrane 12 in Bezug auf eine Längsachse 25 der Installationsdose 1 innerhalb von 180°, insbesondere innerhalb von 160°, des Dosenumfangs angeordnet sind. Mit Vorteil sind zwei Verbindungsöffnungen 23 vorhanden, welche in Bezug auf den Umfang der Installationsdose je links und rechts neben den Membranen 12 angeordnet sind.

### LISTE DER BEZUGSZEICHEN

| | | | |
|---|---|---|---|
| 1 | Installationsdose | 14 | Lasche |
| 2 | Dosenboden | 15 | Dünnstelle |
| 3 | Seitenwand | 16 | Absatz |
| 4 | Installationsöffnung | 17 | Montagemittel |
| 5 | Installationsraum | 18 | Übergangsbereich |
| 6 | Einführkanal | 19 | Vierte Einführöffnung |
| 7 | Erste Einführöffnung | 20 | Verdickung |
| 8 | Zweite Einführöffnung | 21 | Kabel |
| 9 | Wandbereich | 22 | Dosenadapter |
| 10 | Aussenseite | 23 | Verbindungsöffnung |
| 11 | Dritte Einführöffnung | 24 | Wand |
| 12 | Membran | 25 | Längsachse |
| 13 | Rand | | |

## Patentansprüche

1. Installationsdose (1) für elektronische Zwecke umfassend
a. einen Dosenboden (2) und eine sich in eine axiale Richtung (z) erstreckende röhrenförmige Seitenwand (3), welche einen Installationsraum (5) bilden,
b. eine dem Dosenboden (2) gegenüberliegende und von der Seitenwand (3) umgebende Installationsöffnung (4), und
c. zwei deformierbare Membranen (12), welche sich je zumindest bereichsweise über den Dosenboden (2) und die röhrenförmige Seitenwand (3) erstrecken und welche in Bezug auf eine sich in die axiale Richtung erstreckende und in Bezug auf die Seitenwand mittig in der Installationsdose (1) angeordneten Längsachse nur innerhalb von 180°, insbesondere innerhalb von 160° des Dosenumfangs angeordnet sind, und
d. jeweils mindestens eine in der Seitenwand (3) in der jeweiligen Membran (12) angeordnete erste Einführöffnung (7) für ein in die Installationsdose (1) einzuführendes Kabel, welche jeweils von einem heraustrennbaren Wandbereich (9) verschlossen ist, wobei
e. in einem eingeführten Zustand des Kabels durch die jeweilige erste Einführöffnung (7) die Einführöffnung (7) winkelig zur axialen Richtung angeordnet ist und in der Seitenwand ein jeweiliger Einführkanal (6) für das eingeführte Kabel ausgebildet ist, welcher sich entlang einer Aussenseite (10) der Seitenwand (3) erstreckt.

2. Installationsdose (1) gemäss Patentanspruch 1, wobei sich die zwei deformierbaren Membranen (12) in axialer Richtung jeweils über 60% insbesondere über 75% der Installationsdose (1) erstrecken.

3. Installationsdose (1) gemäss Patentanspruch 1 oder 2, wobei in einem eingeführten Zustand des Kabels die um die jeweilige erste Einführöffnung (7) herumliegende deformierbare Membran (12) derart deformiert ist, dass die erste Einführöffnung (7) im eingeführten Zustand des Kabels winkelig zur axialen Richtung ausgerichtet ist und von der ersten Einführöffnung (7) wegweisend durch die Deformation in der Aussenseite der jeweiligen Membran (12) der jeweilige Einführkanal (6) gebildet ist.

4. Installationsdose (1) gemäss Patentanspruch 3, wobei der Einführkanal (6) sich von der jeweiligen Einführöffnung (7) aus und von der Installationsöffnung (4) weglaufend entlang der Seitenwand (3) erstreckt.

5. Installationsdose (1) gemäss einem der vorangehenden Patentansprüche, **wobei** die jeweilige erste Einführöffnung (7) in der axialen Richtung von einem Rand (13) der Installationsöffnung (4) einen Abstand zwischen 25% bis 40% der Gesamtlänge der Installationsdose (1) aufweist.

6. Installationsdose (1) gemäss einem der vorangehenden Patentansprüche, **wobei** in der Seitenwand (3) in der jeweiligen defomierbaren Membran (12) zwei erste Einführöffnungen (7) angeordnet sind.

7. Installationsdose (1) gemäss einem der vorangehenden Patentansprüche, **wobei** die Installationsdose (1) zumindest eine zweite Einführöffnung (8) aufweist, die in der Seitenwand (3) angeordnet ist.

8. Installationsdose (1) gemäss Patentanspruch 7, **wobei** die zumindest eine zweite Einführöffnung (8) in einem mit dem heraustrennbaren Wandbereich (9) verschlossenen Zustand winkelig zur axialen Richtung angeordnet ist.

9. Installationsdose (1) gemäss Patentanspruch 7, **wobei** sich die Membran (12) in axialer Richtung über die Position der zweiten Einführöffnung (8) erstreckt.

10. Installationsdose (1) gemäss einem der vorangehenden Patentansprüche, **wobei** die Installationsdose (1) zwei Verbindungsöffnungen (23) aufweist, welche in Bezug auf den Umfang der Installationsdose (1) je links und rechts neben den zwei deformierbaren Membranen (12) angeordnet sind.

11. Installationsdose (1) gemäss Patentanspruch 10, **wobei** die zwei Verbindungsöffnungen (23) in Bezug auf die Längsachse der Installationsdose (1) gegenüber voneinander angeordnet sind, vorzugsweise koaxial zueinander ausgerichtet.

12. Installationsdose (1) gemäss mindestens einem der Patentansprüche 7 bis 9 und einem der Patentansprüche 10 oder 11, **wobei** die zwei deformierbaren Membranen (12) innerhalb von 160° des Dosenumfangs zwischen den beiden Verbindungsöffnungen (23) angeordnet sind und zumindest zwei zweite Einführöffnungen (8) bezüglich den beiden Verbindungsöffnungen (23) gegenüberliegend der zwei deformierbaren Membranen (12) angeordnet sind.

13. Installationsdose (1) gemäss einem der vorangehenden Patentansprüche, **wobei** in der deformierbaren Membran (12) eine dritte Einführöffnung (11) zum Durchführen eines Rohres in den Installationsraum (5) angeordnet ist, welche von einem heraustrennbaren Wandbereich (9) verschlossen ist.

14. Installationsdose (1) gemäss einem der vorangehenden Patentansprüche, **wobei** die Seitenwand (3) und der Dosenboden (2) zumindest bereichsweise aus einem ersten Spritzgussmaterial besteht und die zwei Membranen (12) und/oder die heraustrennbaren Wandbereiche (9) aus einem zweiten Spritzgussmaterial bestehen.

15. Installationsdose (1) gemäss einem der vorangehenden Patentansprüche, **wobei** die Installationsdose (1) für den Anschluss von Netzwerkkabeln und - steckern geeignet ist.
